# EUROPÄISCHE PATENTSCHRIFT

(11) **EP 2 381 205 B1**
(45) Veröffentlichungstag und Bekanntmachung des Hinweises auf die Patenterteilung: **19.06.2013**
(21) Anmeldenummer: 11002912.1
(22) Anmeldetag: 07.04.2011
(51) Int. Cl.: F41G 7/00, F42B 8/12, F42B 15/10, G09B 9/00

(54) **Verfahren zum Simulieren einer Mission eines unbemannten bewaffneten Flugkörpers**
Method for simulating a mission of an unmanned armed aerial vehicle
Procédé de simulation d'une mission d'un véhicule volant non habité armé

(30) Priorität: 23.04.2010 DE 102010017974
(43) Veröffentlichungstag der Anmeldung: 26.10.2011
(73) Patentinhaber: MBDA Deutschland GmbH, 86529 Schrobenhausen (DE)
(72) Erfinder: Grabmeier, Michael, 83022 Rosenheim (DE); Wohlgemuth, Werner, 85635 Höhenkirchen (DE)
(74) Vertreter: Avenhaus, Beate

(56) Entgegenhaltungen:
- EP-A1- 0 685 700
- EP-A1- 1 895 265
- US-A- 4 541 804
- US-A- 5 624 264

## Beschreibung

### TECHNISCHES GEBIET

Die vorliegende Erfindung betrifft ein Verfahren zum Simulieren einer Mission eines unbemannten, bewaffneten und mit einem Triebwerk versehenen Flugkörpers, der im Tragflug an ein Trägerflugzeug angekoppelt ist, gemäß dem Oberbegriff des Patentanspruchs 1. Sie betrifft weiterhin ein Verfahren zur Umrüstung eines unbemannten, bewaffneten und mit einem Triebwerk versehenen Flugkörpers aus einer Einsatzkonfiguration in eine Simulationskonfiguration gemäß dem Oberbegriff des Patentanspruchs 6. Schließlich betrifft die Erfindung auch einen Flugkörper zum Simulieren einer Mission, bei der der unbemannte, bewaffnete und mit einem Triebwerk versehene Flugkörper im Tragflug an ein Trägerflugzeug angekoppelt ist, gemäß dem Oberbegriff des Patentanspruchs 11.

### STAND DER TECHNIK

Es ist in der Praxis üblich, Tragflugversuche mit einem an ein Trägerflugzeug angekoppelten unbemannten Flugkörper durchzuführen. Derartige Tragflugversuche erfolgen beispielsweise bei einer Integration des Flugkörpers an ein neues Trägerflugzeug oder bei Erprobung einer neuen Flugkörper-Software oder anderer neuer Flugkörper-Baugruppen. Auch bei der Erprobung neuer Software im Trägerflugzeug werden zur Kompatibilitätsüberprüfung derartige Tragflugversuche durchgeführt. Auch können derartige Flüge zur Überprüfung von Missionsplänen vor einem echten Verschuss des Flugkörpers sowie zum Training der Besatzung des Trägerflugzeugs durchgeführt werden.

Bei derartigen Tragflugversuchen wird der Flugkörper softwareseitig in einem Simulationsmodus betrieben. Bislang ist es erforderlich gewesen, den Flugkörper durch erhebliche Eingriffe in dessen Hardware umzubauen, bevor er für solche Simulationsflüge eingesetzt werden konnte. Beispielsweise wurde die Pyrotechnik des Flugkörpers ausgebaut oder deaktiviert und anstelle der scharfen Bewaffnung wurden ungefährliche Ersatzmassen (Gewichtsdummies) eingebaut. Des Weiteren wurde der Flugkörper mit einem Datenrekorder versehen. Diese mechanischen Umbauten erforderten einen erheblichen Aufwand, da insbesondere der Ausbau der scharfen Bewaffnung sehr zeitaufwendig ist und aufgrund des hohen Gewichts nur mit einem Kran zu bewerkstelligen ist. Zudem war es erforderlich, die im Zuge dieser Umrüstung des Flugkörpers ausgebauten oder deaktivierten Flugkörper-Baugruppen durch entsprechende Simulatoren zu ersetzen. Beispielsweise wurden hier ein Simulator für die irreversibel aktivierbare Batterie (Thermalbatterie), ein Simulator für das Entriegeln der Steuerflächen und ein Simulator eingebaut, der die Signalfolge simuliert, die erforderlich ist, um das Abkoppeln des Flugkörpers vom Trägerflugzeug auslösen und sensieren zu können, ohne dabei jedoch pyrotechnische Prozesse auszulösen. Dieser Simulator simulierte außerdem das Durchschalten einer Zündspannung für pyrotechnische Funktionen, die aus Sicherheitsgründen erst nach dem Abgang des Flugkörpers vom Trägerflugzeug aktiviert werden dürfen, beispielsweise das Absprengen der Triebwerkseinlässe und die Aktivierung von Treibladungen für die Triebwerkszündung.

Nicht nur der im Stand der Technik betriebene Aufwand zur Umrüstung eines Flugkörpers ist erheblich, sondern auch die Bevorratung, Wartung und Gewährleistung der Einsatzbereitschaft und gegebenenfalls die Ersatzbeschaffung der erforderlichen Simulatoren sind sehr kostenaufwendig.

Die US 5 624 264 A beschreibt einen Simulator für den Test eines Abwurfs eines Flugkörpers von einem Trägerflugzeug. Durch Nachahmung diverser Funktionen an Bord des Flugkörpers wird noch nicht die gewünschte Realitätsnähe erreicht. Außerdem wird dadurch der notwendige Aufwand bis zur Durchführung eines Simulationsvorganges erhöht.

In der EP 1 895 265 A1 ist ein Verfahren zur Überprüfung der Funktionsfähigkeit eines unbemannten bewaffneten Flugkörpers beschrieben. Die für die Überprüfung des Flugkörpers notwendigen Vorrichtungen sind als Module aufgebaut, die flexibel transportiert werden können. Eine Simulation an einem Trägerflugzeug ist nicht vorgesehen,

Aus der EP 0 685 700 A1 ist eine Simulationseinrichtung für den Abwurf eines Flugkörpers von einem Trägerflugzeug bekannt geworden, die zum Training von Piloten verwendet wird. Hierfür verwendet man einen Nachbau des Flugkörpers, der in aerodynamischer Hinsicht die gleichen Eigenschaften aufweist. Die Eigenschaften der Ausrüstung des Flugkörpers werden jedoch mittels eines im Flugkörper eingebauten Computers simuliert.

Die US 4 451 804 A beschreibt eine Trainingsschnittstelle, die zwischen dem Ausgang des Rack-Kabels und dem Eingang des Dispenser-Kabels angeordnet wird. Hiermit kann die Crew des Trägerflugzeugs verschiedene Situationen von der Waffenauswahl bis zum Abwurf simulieren.

### DARSTELLUNG DER ERFINDUNG

Aufgabe der vorliegenden Erfindung ist es daher, ein Verfahren zum Simulieren einer Mission eines unbemannten, bewaffneten und mit einem Triebwerk versehenen Flugkörpers, der im Tragflug an ein Trägerflugzeug angekoppelt ist, sowie ein Verfahren zur Umrüstung eines unbemannten, bewaffneten und mit einem Triebwerk versehenen Flugkörpers aus einer Einsatzkonfiguration in eine Simulationskonfiguration anzugeben, die mit geringerem Aufwand und zu geringeren Kosten durchführbar sind als im Stand der Technik. Des Weiteren ist es die Aufgabe der vorliegenden Erfindung, einen geeigneten Flugkörper zum Simulieren einer Mission, bei der der unbemannte, bewaffnete und mit einem Triebwerk versehene Flugkörper im Tragflug an ein Trägerflugzeug angekoppelt ist, anzugeben, der sich nur minimal von einem für eine echte Mission einsetzbaren Flugkörper unterscheidet und der mit geringstem Aufwand wieder zu einem einsetzbaren Flugkörper umrüstbar ist.

Die auf das Verfahren zur Simulation gerichtete Aufgabe wird gelöst durch das Verfahren gemäß Patentanspruch 1.

Dieses erfindungsgemäße Verfahren zum Simulieren einer Mission eines unbemannten, bewaffneten und mit einem Triebwerk versehenen Flugkörpers, der im Tragflug an ein Trägerflugzeug angekoppelt ist, wobei der Flugkörper eine irreversibel aktivierbare Batterie zur elektrischen Versorgung von elektrischen Komponenten des Flugkörpers aufweist; bewegbare, aber im Tragflug verriegelte Steuerflächen aufweist; mit einem Suchkopf versehen ist, der über eine mittels eines irreversibel betätigbaren Ventils abgesperrte Kühlmittelleitung mit einem in einem Vorratsbehälter enthaltenen Kühlmittel kühlbar ist, und einen Computer aufweist, auf dem eine Software läuft, die zum Einleiten eines autonomen Betriebszustands des Flugkörpers zumindest folgende Schaltsignale erzeugt, die vom Computer an entsprechende Schaltsignalleitungen abgegeben werden: ein erstes Signal zum Aktivieren der Batterie; ein zweites Signal zum Entriegeln der Steuerflächen; ein drittes Signal zum Öffnen des Ventils sowie ein viertes Signal zum Betätigen einer Startvorrichtung für das Triebwerk; zeichnet sich dadurch aus, dass der Flugkörper mit den folgenden Schritten aus einer Einsatzkonfiguration in eine Simulationskonfiguration gebracht wird: Deaktivieren der Startvorrichtung; Austauschen des irreversibel betätigbaren Ventils gegen ein schaltbares Ventil oder Austauschen des mit dem irreversibel betätigbaren Ventil versehenen Kühlmittel-Vorratsbehälters gegen einen mit einem schaltbaren Ventil ausgestatteten Kühlmittel-Vorratsbehälter und Trennen der zur Batterie verlaufenden Schaltsignalleitung für das erste Signal und Verbinden dieser Schaltsignalleitung mit dem Ventil; und dass eine simulierte Mission durchgeführt wird, wobei das Trägerflugzeug () mit am Trägerflugzeug () angekoppeltem Flugkörper () entlang einer vom Missionsplan vorgegebenen Flugbahn gesteuert wird und wobei das Schaltsignal für das Aktivieren der Batterie () in der Simulationskonfiguration zum Ventil () geleitet wird.

### VORTEILE

Bei diesem erfindungsgemäßen Verfahren sind zur Vorbereitung des Flugkörpers auf die Durchführung des Simulationsflugs nur geringfügige Eingriffe an der Hardware des Flugkörpers vorzunehmen. Durch das Deaktivieren der Startvorrichtung und das Trennen der zur Batterie verlaufenden Schaltsignalleitung für das erste Signal wird mit einfachsten Maßnahmen erreicht, dass keine irreversiblen Funktionen im Flugkörper mehr ausgelöst werden können. Da die Batterie somit nicht mehr aktiviert werden kann, können keine flugkörperautonomen Funktionen, wie beispielsweise das Auslösen und Bewegen der Steuerflächen, ausgeführt werden. Dadurch, dass die Startvorrichtung deaktiviert ist, kann auch das Triebwerk des Flugkörpers während des Simulationsflugs, bei welchem der Flugkörper am Trägerflugzeug angekoppelt bleibt, nicht gezündet werden. Schließlich ermöglicht der Austausch des irreversibel betätigbaren Ventils gegen ein schaltbares Ventil oder das Austauschen des mit dem irreversibel betätigbaren Ventil versehenen Kühlmittel-Vorratsbehälters gegen einen mit einem schaltbaren Ventil ausgestatteten Kühlmittel-Vorratsbehälter den Betrieb des Suchkopfes des Flugkörpers, der für die Durchführung der Simulation erforderlich ist, da der Missionsplan bei der Simulation unter Verwendung der Zielsuchfunktion des Suchkopfes abgeflogen wird. Durch diese minimalen Hardwareeingriffe am Flugkörper werden also einerseits die Gefahrenpotentiale deaktiviert, die die Flugsicherheit des Trägerluftfahrzeugs bei angekoppeltem Flugkörper während des Simulationsflugs beeinträchtigen könnten, und andererseits wird der Betrieb des Suchkopfes des Flugkörpers durch die Gewährleistung der Suchkopf-Kühlung ermöglicht.

Eine bevorzugte Weiterbildung des Verfahrens, wobei der Flugkörper pyrotechnische Elemente und/oder Aktuatoren aufweist, die durch weitere Signale aktivierbar sind, welche vom Computer an entsprechende Schaltsignalleitungen abgegeben werden, zeichnet sich dadurch aus, dass zum Erreichen der Simulationskonfiguration weiterhin die pyrotechnischen Elemente und/oder Aktuatoren aus dem Flugkörper ausgebaut oder deaktiviert werden. Mit dieser Ausgestaltung des Verfahrens wird die Betriebssicherheit sowohl für das Bodenpersonal bei der Umrüstung des Flugkörpers, als auch während des Einsatzes am Trägerflugzeug weiter erhöht, da das versehentliche Auslösen von pyrotechnischen Elementen und/oder Aktuatoren dadurch unmöglich wird. Derartige pyrotechnische Elemente oder Aktuatoren sind beispielsweise Zündpillen für das Abspringen der Triebwerksverkleidungen für den Lufteinlass des Flugkörper-Triebwerks oder für das Zünden von Gaskartuschen und des Treibstoffs des Triebwerks.

Vorzugsweise werden die Leiter der Schaltsignalleitungen vom Computer zu den ausgebauten oder deaktivierten pyrotechnischen Elementen und/oder Aktuatoren untereinander und gemeinsam gegen Masse verbunden. Hierdurch wird erreicht, dass die Verbindung gegen Masse, die beispielsweise durch einen Abschlusswiderstand vorgenommen werden kann, das Vorhandensein der entsprechenden Elemente oder Aktuatoren emuliert, so dass das Nichtvorhandensein der pyrotechnischen Elemente oder Aktuatoren von der Simulationssoftware nicht bemerkt wird, weil keine undefinierten Signalpegel auftreten können.

Die Deaktivierung der Startvorrichtung (Batterie, Triebwerk) erfolgt vorzugsweise durch Unterbrechen einer die Startvorrichtung in der Einsatzkonfiguration mit einem Aktivierungssignal beaufschlagenden Schaltsignalleitung.

Vorteilhaft ist es auch, wenn bei der Umrüstung des Flugkörpers weiterhin der Einbau einer Telemetrieeinrichtung und/oder eines Datenrekorders in den Flugkörper vorgenommen wird und wenn die Telemetrieeinrichtung und/oder der Datenrekorder mit dem Computer zur Datenübertragung verbunden wird, so dass im Verlauf der simulierten Mission Steuersignale, die vom Computer an Komponenten des Flugkörpers ausgegeben werden, sowie die daraus resultierenden Antwortsignale der Komponenten im Datenrekorder gespeichert oder mittels der Telemetrieeinrichtung an eine externe Kontrollstation übertragen werden können.

Die auf das Verfahren zur Umrüstung des Flugkörpers gerichtete Aufgabe wird gelöst durch das im Patentanspruch 6 angegebene Verfahren.

Dieses Verfahren zur Umrüstung eines unbemannten, bewaffneten und mit einem Triebwerk versehenen Flugkörpers aus einer Einsatzkonfiguration in eine Simulationskonfiguration, wobei der Flugkörper eine irreversibel aktivierbare Batterie zur elektrischen Versorgung von elektrischen Komponenten des Flugkörpers aufweist; bewegbare, aber im Tragflug verriegelte Steuerflächen aufweist; mit einem Suchkopf versehen ist, der über eine mittels eines irreversibel betätigbaren Ventils abgesperrte Kühlmittelleitung mit einem in einem Vorratsbehälter enthaltenen Kühlmittel kühlbar ist, und einen Computer aufweist, auf dem eine Software läuft, die zum Einleiten eines autonomen Betriebszustands des Flugkörpers zumindest folgende Schaltsignale erzeugt, die vom Computer an entsprechende Schaltsignalleitungen abgegeben werden: ein erstes Signal zum Aktivieren der Batterie; ein zweites Signal zum Entriegeln der Steuerflächen; ein drittes Signal zum Öffnen des Ventils sowie ein viertes Signal zum Betätigen einer Startvorrichtung für das Triebwerk; zeichnet sich durch die folgenden Schritte aus: Deaktivieren der Startvorrichtung; Austauschen des irreversibel betätigbaren Ventils gegen ein schaltbares Ventil oder Austauschen des mit dem irreversibel betätigbaren Ventil versehenen Kühlmittel-Vorratsbehälters gegen einen mit einem schaltbaren Ventil ausgestatteten Kühlmittel-Vorratsbehälter und Trennen der zur Batterie verlaufenden Schaltsignalleitung für das erste Signal und Verbinden dieser Schaltsignalleitung mit dem Ventil.

Mit diesem erfindungsgemäßen Umrüstverfahren werden die bereits in Bezug auf das Verfahren gemäß Patentanspruch 1 angegebene Vorteile erzielt.

Auch bei diesem Umrüstverfahren ist es von Vorteil, wenn bei einem Flugkörper, der pyrotechnische Elemente und/oder Aktuatoren aufweist, die durch weitere Signale aktivierbar sind, welche vom Computer an entsprechende Schaltsignalleitungen abgegeben werden, zum Erreichen der Simulationskonfiguration weiterhin die pyrotechnischen Elemente und/oder Aktuatoren aus dem Flugkörper ausgebaut oder deaktiviert werden. Hierdurch wird, wie bereits eingangs geschildert worden ist, die Betriebssicherheit des zur Simulation vorgesehenen Flugkörpers sowohl am Boden als auch in der Luft erhöht.

Vorzugsweise werden dazu die Leiter der Schaltsignalleitungen vom Computer zu den ausgebauten oder deaktivierten pyrotechnischen Elementen und/oder Aktuatoren untereinander und gemeinsam gegen Masse verbunden. Auch hierbei kann die Verbindung gegen Masse mittels Abschlusswiderständen vorgenommen werden.

In einer bevorzugten Ausführungsform des Umrüstverfahrens erfolgt die Deaktivierung der Startvorrichtung durch Unterbrechen einer die Startvorrichtung in der Einsatzkonfiguration mit einem Aktivierungssignal beaufschlagenden Schaltsignalleitung.

Um bei der Durchführung des Simulationsflugs möglicherweise auftretende Fehler zuverlässig erfassen zu können, ist es von Vorteil, wenn bei der Umrüstung des Flugkörpers auch eine Telemetrieeinrichtung und/oder ein Datenrekorder in den Flugkörper eingebaut wird und wenn die Telemetrieeinrichtung und/oder der Datenrekorder mit dem Computer zur Datenübertragung verbunden wird beziehungsweise werden.

Der auf den Flugkörper gerichtete Teil der Aufgabe wird gelöst durch den im Patentanspruch 11 angegebenen Flugkörper.

Dieser erfindungsgemäße Flugkörper zum Simulieren einer Mission, bei der der unbemannte, bewaffnete und mit einem Triebwerk versehene Flugkörper im Tragflug an ein Trägerflugzeug angekoppelt ist, wobei der Flugkörper eine irreversibel aktivierbare Batterie zur elektrischen Versorgung von elektrischen Komponenten des Flugkörpers aufweist; bewegbare, aber im Tragflug verriegelte Steuerflächen aufweist; mit einem Suchkopf versehen ist, der über eine mittels eines schaltbaren Ventils abgesperrte Kühlmittelleitung mit einem in einem Vorratsbehälter enthaltenen Kühlmittel kühlbar ist, und einen Computer aufweist, auf dem eine Software läuft, die zum Einleiten eines autonomen Betriebszustands des Flugkörpers zumindest folgende Schaltsignale erzeugt, die vom Computer an entsprechende Schaltsignalleitungen abgegeben werden: ein erstes Signal zum Aktivieren der Batterie; ein zweites Signal zum Entriegeln der Steuerflächen; ein drittes Signal zum Öffnen des Ventils sowie ein viertes Signal zum Betätigen einer Startvorrichtung für das Triebwerk; zeichnet sich dadurch aus, dass die Startvorrichtung des Flugkörpers deaktiviert ist; dass die das dritte Signal übertragende Schaltsignalleitung unterbrochen ist; dass die zur Batterie verlaufende Schaltsignalleitung für das erste Signal von der Batterie abgeklemmt und mit dem Ventil verbunden ist und dass das Ventil reversibel betätigbar ist.

Dieser Flugkörper besitzt den Vorteil, dass er gegenüber einem für eine echte Mission einsetzbaren Flugkörper nur geringfügig abgewandelt ist und daher schnell und ohne größeren Aufwand aus dieser Simulationskonfiguration wieder in die Einsatzkonfiguration rückgerüstet werden kann.

Bei einer vorteilhaften Weiterbildung dieses Flugkörpers weist der Flugkörper pyrotechnische Elemente und/oder Aktuatoren auf, die durch weitere Signale aktivierbar sind, welche vom Computer an entsprechende Schaltsignalleitungen abgegeben werden. Diese Weiterbildung des erfindungsgemäßen Flugkörpers zeichnet sich dadurch aus, dass die Schaltsignalleitungen vom Computer zu den pyrotechnischen Elementen und/oder Aktuatoren aus dem Flugkörper ausgebaut oder unterbrochen sind. Wie bereits ausgeführt worden ist, besitzt diese Weiterbildung des erfindungsgemäßen Flugkörpers eine noch weiter erhöhte Betriebssicherheit am Boden und in der Luft.

Vorzugsweise sind die Leiter der Schaltsignalleitungen vom Computer zu den ausgebauten oder deaktivierten pyrotechnischen Elementen und/oder Aktuatoren untereinander und gemeinsam gegen Masse verbunden, wobei die Masseverbindung durch einen Abschlusswiderstand hergestellt sein kann.

Weiter vorzugsweise ist die zur Startvorrichtung verlaufende Schaltsignalleitung unterbrochen. Diese Unterbrechung stellt eine einfache und wirksame Methode dar, die Aktivierung der Startvorrichtung und damit die Zündung des Triebwerks des Flugkörpers zu verhindern.

In einer weiteren bevorzugten Ausführungsform ist der Flugkörper mit einer Telemetrieeinrichtung und/oder einem Datenrekorder ausgestattet und die Telemetrieeinrichtung und/oder der Datenrekorder ist mit dem Computer zur Datenübertragung verbunden. Diese Ausführungsform weist die bereits eingangs in Verbindung mit den Verfahren an entsprechender Stelle geschilderten Vorteile auf.

Schließlich ist es auch noch vorteilhaft, wenn die Kontakte der Batterie, an denen in der Einsatzkonfiguration die Schaltsignalleitung angeschlossen ist, untereinander und gemeinsam gegen Masse verbunden sind. Auch hier kann die Verbindung gegen Masse mit einem Abschlusswiderstand erfolgen.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- Fig. 1: eine schematische Darstellung eines an einem Luftfahrzeug angekoppelten unbemannten Flugkörpers gemäß der Erfindung;
- Fig. 2: eine schematische Darstellung der Komponenten des Flugkörpers aus Fig. 1 in einer Einsatzkonfiguration und
- Fig. 3: eine schematische Darstellung der Komponenten des Flugkörpers aus Fig. 1 in einer Simulationskonfiguration.

### DARSTELLUNG VON BEVORZUGTEN AUSFÜHRUNGSBEISPIELEN

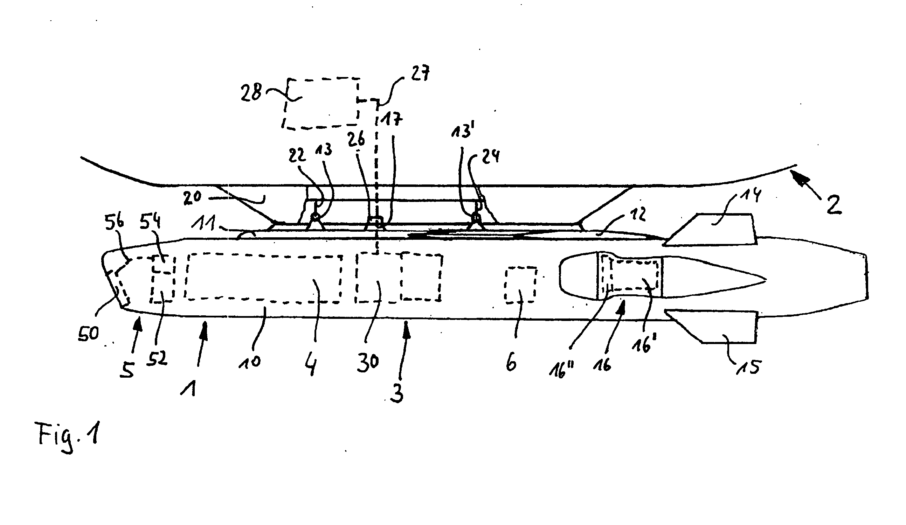

Figur 1 zeigt einen unbemannten Flugkörper 1, der einen eine Nutzlast aufnehmenden Rumpf 10, auf dem Rumpf 10 angebrachte Tragflächen 12, zumindest eine Antriebseinrichtung 16 mit zwei seitlich am Rumpf 10 vorgesehenen Lufteinlässen, von denen nur der linke gezeigt ist, sowie vier über den Umfang gleichmäßig voneinander beabstandete, schwenkbare Steuerflächen 14, 15 aufweist, die mittels nicht gezeigter Steuerflächenantriebe in bekannter Weise bewegbar am Rumpf 10 angebracht sind.

Der Flugkörper 1 ist an einem schematisch dargestellten Luftfahrzeug 2 angekoppelt. Das Luftfahrzeug 2 weist dafür an seiner Rumpfunterseite oder an der Unterseite einer Tragfläche einen Bombenpylon 20 auf, der in Figur 1 teilweise geschnitten dargestellt ist. Der Bombenpylon 20 ist an seiner Unterseite teilweise offen ausgebildet und in diesem Bereich im Inneren des Bombenpylons 20 mit zwei lösbaren Halteeinrichtungen 22, 24 versehen, die mit zwei entsprechenden Gegenhalteeinrichtungen 13, 13', die aus einem oberen Tragelement 11 des Flugkörpers 1 hervorstehen, in Eingriff stehen und den Flugkörper 1 am Luftfahrzeug 2 abkoppelbar fixieren. Im Bereich der offenen Unterseite des Bombenpylons 20 ist ein luftfahrzeugseitiger elektrischer Steckverbinder 26 vorgesehen, der mit einem Gegensteckverbinder 17 an der Oberseite des Flugkörpers 1 mechanisch und elektrisch zur Übertragung von Energie und zum Datenaustausch verbunden ist.

Der Flugkörper 1 ist weiterhin mit einer Avionik 3 versehen, die ebenfalls nur schematisch dargestellt ist und die sich im Inneren des Rumpfs 10 befindet. Die Avionik 3 des Flugkörpers ist mit einem Bordcomputer 30 versehen, der über den Gegensteckverbinder 17 an der Oberseite des Flugkörpers 1 und die luftfahrzeugseitige elektrische Steckverbindung 26 mittels eines Umbilical-Kabels 27 mit einem Bordcomputer 28 des Luftfahrzeugs 2 zum Datenaustausch verbunden ist. Über das Umbilical-Kabel 27 wird der Flugkörper 1 vom Luftfahrzeug 2 im Tragflug auch mit elektrischer Energie versorgt.

Im Inneren des Flugkörpers sind als Bewaffnung ein Penetrator und eine Vorhohlladung (Precharge) vorgesehen, die in Fig. 1 nur schematisch dargestellt und mit dem Bezugszeichen 4 bezeichnet sind.

In der Nase des Flugkörpers ist ein Suchkopf 5 vorgesehen, der eine Bilderfassungseinrichtung 50 enthält. Die Bilderfassungseinrichtung 50 wird von einem Kühlmittel gekühlt, das in einem Kühlmittel-Vorratsbehälter 52 bevorratet wird. Der Kühlmittelbehälter 52 ist mit einem Ventil 54 versehen, von dem aus eine Kühlmittelleitung 56 zur Bilderfassungeinrichtung 50 verläuft.

Der Flugkörper 1 weist zudem eine autonome elektrische Stromversorgung auf, die von einer irreversibel aktivierbaren Batterie 6 gebildet ist. Üblicherweise ist diese irreversibel aktivierbare Batterie 6 eine Thermalbatterie, die von einem von extern aufgebrachten elektrischen Impuls aktivierbar ist und dann für einen vorgegebenen Zeitraum eine vorgegebene Menge an elektrischer Energie abgibt.

Die Antriebseinrichtung 16 des Flugkörper 1 weist ein Triebwerk 16' auf, das von einer schematisch dargestellten Startvorrichtung 16" in Betrieb setzbar ist.

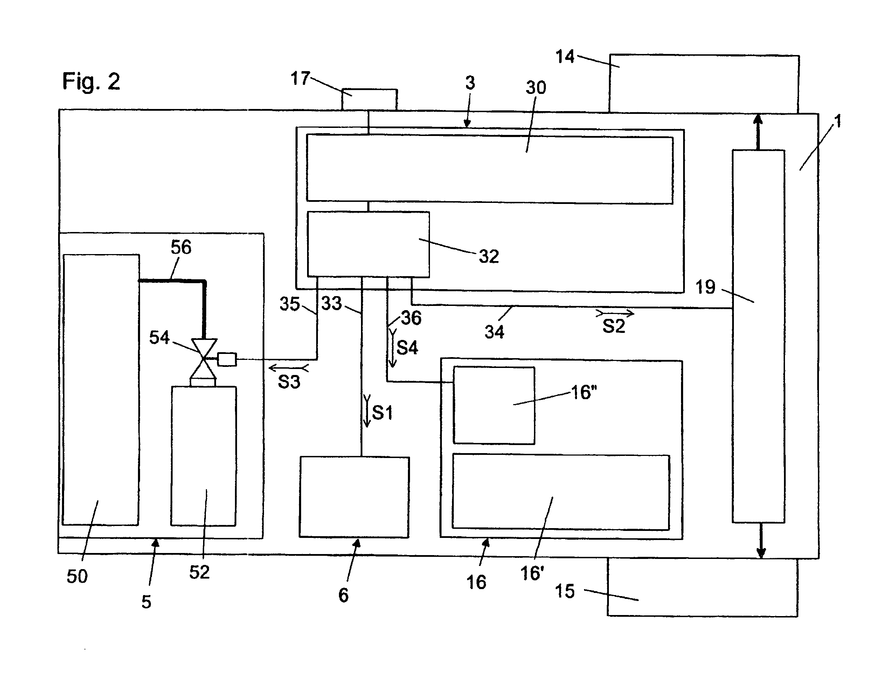

Das Inbetriebsetzen des Flugkörpers 1 beim Abgang des Flugkörpers 1 vom Luftfahrzeug 2 wird nachfolgend anhand der Fig. 2 beschrieben.

In Fig. 2 ist ein schematisches Funktionsschaubild eines Flugkörpers 1 dargestellt, dessen Avionik 3 einen Bordcomputer 30 aufweist, der mit dem an der Oberseite des Flugkörpers 1 vorgesehenen Gegensteckverbinder 17 für das Umbilical-Kabel 27 verbunden ist. Der Bordcomputer 30 ist weiterhin mit einem untergeordneten Computer 32 verbunden, der die Inbetriebnahme der für den autonomen Betrieb des Flugkörpers 1 nach dem Abgang vom Luftfahrzeug 2 erforderlichen Komponenten steuert.

Dazu ist der Computer 32 über eine erste Schaltsignalleitung 33 mit der irreversibel aktivierbaren Batterie 6 zur Übertragung eines erstes Signals S1 zum Aktivieren der Batterie 6 verbunden.

Eine zweite Schaltsignalleitung 34 verbindet den Computer 32 mit einer Auslöseeinrichtung 19 für die Entriegelung der Steuerflächen 14, 15. Ein zweites Signal S2 zum Entriegeln der Steuerflächen 14, 15 wird über die zweite Schaltsignalleitung 34 vom Computer 32 zum gegebenen Zeitpunkt an die Auslöseeinrichtung 19 übertragen.

Eine dritte Schaltsignalleitung 35 verbindet den Computer 32 mit einem irreversibel betätigbaren Ventil 54 des Vorratsbehälters 52 für das den Suchkopf 5 kühlende Kühlmittel. Zum Öffnen des Ventils 54 überträgt der Computer 32 ein drittes Signal S3 über die dritte Schaltsignalleitung 35 an das Ventil 54.

Schließlich ist der Computer 32 noch über eine vierte Schaltsignalleitung 36 mit einer Startvorrichtung 16" des Triebwerks 16' der Antriebseinrichtung 16 verbunden. Auch für eventuell vorgesehene weitere, nicht gezeigte Antriebseinrichtungen ist jeweils eine gleichartige Schaltsignalleitung vorgesehen.

Zum Starten des Triebwerks 16' überträgt der Computer 32 ein viertes Signal S4 an die Startvorrichtung 16", die daraufhin das Triebwerk 16' startet.

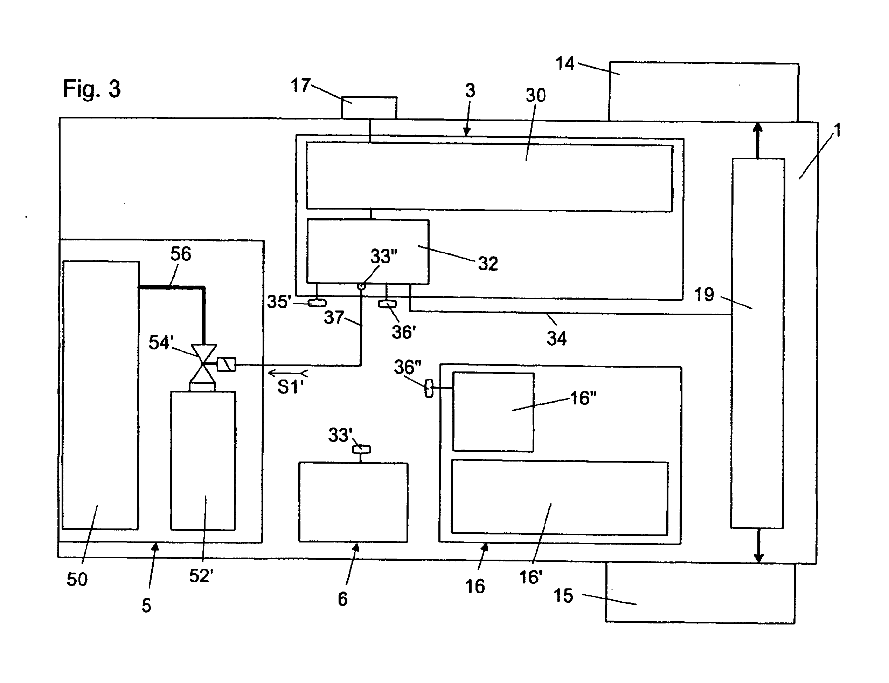

Diese in Fig. 2 dargestellte Einsatzkonfiguration des Flugkörpers 1 wird nun mit wenigen Handgriffen in die in Fig. 3 dargestellte Simulationskonfiguration umgerüstet, wenn der Flugkörper 1 für Simulationsaufgaben verwendet oder getestet werden soll.

In Fig. 3 ist zu erkennen, dass die erste Schaltsignalleitung 33 zwischen dem Computer 32 und der Batterie 6 unterbrochen worden ist und der frei gewordene Anschluss an der Batterie 6 mit einem Abschlusswiderstand 33' abgeschlossen worden ist. Des Weiteren ist die dritte Schaltsignalleitung 35 zwischen dem Bordcomputer 32 und dem Ventil 54 in der Kühlmittelleitung 56 des Suchkopfs 5 unterbrochen worden und der entsprechende Anschluss am Computer 32 wurde mit einem Abschlusswiderstand 35' belegt.

Der mit dem irreversibel betätigbaren Ventil 54 versehene Kühlmittel-Vorratsbehälter 52 zur Kühlung des Suchkopfs 5 wurde ausgetauscht gegen einen mit einem schaltbaren Ventil 54' versehenen Kühlmittel-Vorratsbehälter 52'.
Der Anschluss 33", der am Computer 32 zum Anschluss der in der Einsatzkonfiguration zur Batterie 6 verlaufenden ersten Schaltsignalleitung vorgesehen ist, wird zur Herstellung der in Fig. 3 gezeigten Simulationskonfiguration mit einem Simulationskabel 37 verbunden, das mit seinem anderen Ende an das schaltbare Ventil 54' des Kühlmittel-Vorratsbehälters 52' angeschlossen ist.

Eine Unterbrechung der zweiten Schaltsignalleitung 34, die in der Einsatzkonfiguration vom Computer 32 zur Auslöseeinrichtung 19 verläuft, ist nicht erforderlich, da das Entriegeln der Steuerflächen nur bei aktivierter Batterie 6 möglich ist.

Schließlich wurde auch die vierte Schaltsignalleitung vom Computer 32 zur Startvorrichtung 16" unterbrochen und die entsprechenden freien Anschlüsse am Computer 32 und an der Startvorrichtung 16" wurden durch Abschlusswiderstände 36', 36" abgeschlossen.

Mit dieser durch wenige geringfügige Maßnahmen umgerüsteten Konfiguration des Flugkörpers 1 lässt sich eine simulierte Mission des Flugkörpers durchführen, ohne dass die irreversibel betätigbare Batterie 6, die Startvorrichtung 16" und die Auslöseeinrichtung 19 aktiviert werden können. Durch die auf die entsprechenden Anschlüsse am Computer 32 aufgesetzten Abschlusswiderstände 35', 36' wird gewährleistet, dass das Fehlen der ursprünglich an diesen Anschlüssen des Computers 32 angeschlossenen Komponenten von der Simulationssoftware nicht bemerkt wird, da keine undefinierten Signalzustände auftreten können.

Die Verbindung des Anschlusses 33" des Computers 32 über das Simulationskabel 37 mit dem schaltbaren Ventil 54' ermöglicht es, dass das ursprünglich für das Aktivieren der Batterie 6 vorgesehene Signal S1 als Signal S1' zum Öffnen des Ventils 54' und damit zum Einschalten der Kühlung des Suchkopfes 5 genutzt, also zweckentfremdet, wird.

Die Logik der Test- und Simulationssoftware zur Aktivierung des operationellen Zustands des Flugkörpers 1 (Release-Simulation) erfordert üblicherweise, dass das Signal S1 zur Aktivierung der Batterie 6 vom Computer 32 abgegeben worden ist, bevor die Kühlung des Suchkopfes 5 aktiviert werden kann. Weiterhin ist es in der Einsatzkonfiguration des Flugkörpers erforderlich, vor der Aktivierung der Kühlung des Suchkopfes 5 und dem Starten des Triebwerks 16' die Steuerflächen 14, 15 und den Abgangssensor sowie weitere Sicherheitseinrichtungen zu entriegeln. Diese Reihenfolge ist in der Aktivierungsprozedur des operationellen Zustands des Flugkörpers vorgegeben. Diese Maßnahmen lassen sich jedoch bei einem Simulationsbetrieb, bei dem der Flugkörper 1 am Flugzeug 2 angekoppelt ist und bleibt, nicht durchführen.

Bei der Simulation wird daher der erste Schritt zur Aktivierung des autonomen Zustands des Flugkörpers 1, der bei der Einsatzkonfiguration durch die Abgabe des ersten Schaltsignals S1 an die Batterie 6 eingeleitet wird, in der Simulationskonfiguration abgewandelt, indem dieses Signal vom Computer 32 an das schaltbare Ventil 54' abgegeben, also umgeleitet, wird. Dadurch kann die Kühlung für den Suchkopf 5 in der Simulationskonfiguration aktiviert werden, ohne dass andere Voraussetzungen, wie sie in der Einsatzkonfiguration gefordert sind, erfüllt sein müssen. Die Bilderfassungseinrichtung 50 kann somit arbeiten und entsprechende relevante Signale können flugkörperintern aufgezeichnet und/oder über eine Telemetrieausrüstung des Flugkörpers 1 oder des Flugzeugs 2 zum Beispiel an eine Bodenstation übertragen werden.

Das erfindungsgemäße Verfahren schafft also zusätzliche Sicherheitsfeatures, nämlich, da die Batterie 6 abgetrennt ist und bleibt, ist keine autonome Eigenenergieversorgung und damit keine Aktivierung von irreversiblen Flugkörperfunktionen möglich (Entriegeln der Steuerflächen 14, 15, Öffnen der im Tragflug zusammengelegten Tragflächen etc..).

Des Weiteren können zusätzliche Sicherheitsmassnahmen im Verfahren der Erfindung realisiert werden:
- eventuell vorhandene Zündpillen für Absprengen der Triebwerkseinlässe können ausgebaut werden;
- Stecker für die Aktivierung der Zündung von Gaskartuschen und Treibstoff des Triebwerks können abgetrennt werden;
- Abschiusswiderstände zur Vermeidung von undefinierten Signalzuständen können vorgesehen werden.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 1: Flugkörper
- 2: Luftfahrzeug
- 3: Avionik
- 4: Waffe
- 5: Suchkopf
- 6: Batterie
- 10: Rumpf
- 11: Tragelement
- 12: Tragflächen
- 13: Gegenhalteeinrichtung
- 13': Gegenhalteeinrichtung
- 14: Steuerfläche
- 15: Steuerfläche
- 16: Antriebseinrichtung
- 16': Triebwerk
- 16": Startvorrichtung
- 17: Gegensteckverbindung
- 19: Auslöseeinrichtung
- 20: Bombenpylon
- 22: Halteeinrichtung
- 24: Halteeinrichtung
- 26: Steckverbindung
- 27: Umbilical-Kabel
- 28: Bordcomputer
- 30: Bordcomputer
- 32: Computer
- 33: erste Schaltsignalleitung
- 33': Abschlusswiderstand
- 33": Anschluss der Schaltsignalleitung
- 34: zweite Schaltsignalleitung
- 34': Abschlusswiderstand
- 34": Abschlusswiderstand
- 35: dritte Schaltsignalleitung
- 35': Abschlusswiderstand
- 36: vierte Schaltsignalleitung
- 36': Abschlusswiderstand
- 36": Abschlusswiderstand
- 37: Simulationskabel
- 50: Bilderfassungseinrichtung
- 52: Kühlmittel-Vorratsbehälter
- 52': Kühlmittel-Vorratsbehälter
- 54: Ventil
- 54': schaltbares Ventil
- 56: Kühlmittelleitung
- S1: erstes Signal
- S1': Signal zum Öffnen des Ventils 54'
- S2: zweites Signal
- S3: drittes Signal
- S4: viertes Signal

## Patentansprüche

1. Verfahren zum Simulieren einer Mission eines unbemannten, bewaffneten und mit einem Triebwerk (16') versehenen Flugkörpers (1), der im Tragflug an ein Trägerflugzeug (2) angekoppelt ist, wobei der Flugkörper (1)
- eine irreversibel aktivierbare Batterie (6) zur elektrischen Versorgung von elektrischen Komponenten des Flugkörpers (1) aufweist;
- bewegbare, aber im Tragflug verriegelte Steuerflächen (14, 15) aufweist;
- mit einem Suchkopf (5) versehen ist, der über eine mittels eines irreversibel betätigbaren Ventils (54) abgesperrte Kühlmittelleitung (56) mit einem in einem Vorratsbehälter (52) enthaltenen Kühlmittel kühlbar ist, und
- einen Computer (32) aufweist, auf dem eine Software läuft, die zum Einleiten eines autonomen Betriebszustands des Flugkörpers zumindest folgende Schaltsignale erzeugt, die vom Computer (32) an entsprechende Schaltsignalleitungen (33, 34, 35, 36) abgegeben werden:
· ein erstes Signal (S1) zum Aktivieren der Batterie (6);
· ein zweites Signal (S2) zum Entriegeln der Steuerflächen (14, 15);
• ein drittes Signal (S3) zum Öffnen des Ventils (54) sowie
• ein viertes Signal (S4) zum Betätigen einer Startvorrichtung (16") für das Triebwerk (16');
**dadurch gekennzeichnet,**
- **dass** der Flugkörper (1) mit den folgenden Schritten aus einer Einsatzkonfiguration in eine Simulationskonfiguration gebracht wird:
a) Deaktivieren der Startvorrichtung (16");
b) Austauschen des irreversibel betätigbaren Ventils (54) gegen ein schaltbares Ventil (54') oder Austauschen des mit dem irreversibel betätigbaren Ventil (54) versehenen Kühlmittel-Vorratsbehälters (52) gegen einen mit einem schaltbaren Ventil (54') ausgestatteten Kühlmittel-Vorratsbehälter (52') und
c) Trennen der zur Batterie (6) verlaufenden Schaltsignalleitung (33) für das erste Signal (S1) und Verbinden des dieser Schaltsignalleitung (33) zugeordneten Ausgangs (33") des Computers (32) mit dem schaltbaren Ventil (54');
- **dass** eine simulierte Mission durchgeführt wird, wobei das Trägerflugzeug (2) mit am Trägerflugzeug (2) angekoppeltem Flugkörper (1) entlang einer vom Missionsplan vorgegebenen Flugbahn gesteuert wird und wobei das Schaltsignal für das Aktivieren der Batterie (6) in der Simulationskonfiguration zum schaltbaren Ventil (54') geleitet wird.

2. Verfahren nach Anspruch 1, wobei der Flugkörper (1) pyrotechnische Elemente und/oder Aktuatoren aufweist, die durch weitere Signale aktivierbar sind, welche vom Computer an entsprechende Schaltsignalleitungen abgegeben werden;
**dadurch gekennzeichnet,**
**dass** zum Erreichen der Simulationskonfiguration weiterhin die pyrotechnischen Elemente und/oder Aktuatoren aus dem Flugkörper ausgebaut oder deaktiviert werden.

3. Verfahren nach Anspruch 2,
**dadurch gekennzeichnet,**
**dass** die Leiter der Schaltsignalleitungen (33, 34, 35, 36) vom Computer (32) zu den ausgebauten oder deaktivierten pyrotechnischen Elementen und/oder Aktuaktoren untereinander und gemeinsam gegen Masse verbunden werden.

4. Verfahren nach Anspruch 1, 2 oder 3,
**dadurch gekennzeichnet,**
**dass** die Deaktivierung der Startvorrichtung (16") im Schritt a) durch Unterbrechen einer die Startvorrichtung (16") in der Einsatzkonfiguration mit einem Aktivierungssignal beaufschlagenden Schaltsignalleitung (36) erfolgt.

5. Verfahren nach einem der vorhergehenden Ansprüche,
**dadurch gekennzeichnet,**
- **dass** nach Schritt c) weiterhin der folgende Schritt durchgeführt wird:
d) Einbau einer Telemetrieeinrichtung und/oder eines Datenrecorders in den Flugkörper (1) und Verbinden der Telemetrieeinrichtung und/oder des Datenrecorders mit dem Computer (32) zur Datenübertragung und
- **dass** im Verlauf der simulierten Mission Steuersignale, die vom Computer (32) an Komponenten des Flugkörpers (1) ausgegeben werden, sowie die daraus resultierenden Antwortsignale der Komponenten im Datenrecorder gespeichert oder mittels der Telemetrieeinrichtung an eine externe Kontrollstation übertragen werden.

6. Verfahren zur Umrüstung eines unbemannten, bewaffneten und mit einem Triebwerk (16') versehenen Flugkörpers (1) aus einer Einsatzkonfiguration in eine Simulationskonfiguration, wobei der Flugkörper (1)
- eine irreversibel aktivierbare Batterie (6) zur elektrischen Versorgung von elektrischen Komponenten des Flugkörpers (1) aufweist;
- bewegbare, aber im Tragflug verriegelte Steuerflächen (14, 15) aufweist;
- mit einem Suchkopf (5) versehen ist, der über eine mittels eines irreversibel betätigbaren Ventils (54) abgesperrte Kühlmittelleitung (56) mit einem in einem Vorratsbehälter (52) enthaltenen Kühlmittel kühlbar ist, und
- einen Computer (32) aufweist, auf dem eine Software läuft, die zum Einleiten eines autonomen Betriebszustands des Flugkörpers zumindest folgende Schaltsignale erzeugt, die vom Computer an entsprechende Schaltsignalleitungen (33, 34, 35, 36) abgegeben werden:
• ein erstes Signal (S1) zum Aktivieren der Batterie (6);
• ein zweites Signal (S2) zum Entriegeln der Steuerflächen (14, 15);
• ein drittes Signal (S3) zum Öffnen des Ventils (54) sowie
• ein viertes Signal (S4) zum Betätigen einer Startvorrichtung (16") für das Triebwerk (16');
**gekennzeichnet durch** die folgenden Schritte:
- Deaktivieren der Startvorrichtung (16");
- Austauschen des irreversibel betätigbaren Ventils (54) gegen ein schaltbares Ventil (54') oder Austauschen des mit dem irreversibel betätigbaren Ventil (54) versehenen Kühlmittel-Vorratsbehälters (52) gegen einen mit einem schaltbaren Ventil (54') ausgestatteten Kühlmittel-Vorratsbehälter (52') und
- Trennen der zur Batterie (6) verlaufenden Schaltsignalleitung (33) für das erste Signal und Verbinden des dieser Schaltsignalleitung zugeordneten Ausgangs (33") des Computer (32) mit dem schaltbaren Ventil (54').

7. Verfahren nach Anspruch 6, wobei der Flugkörper (1) pyrotechnische Elemente und/oder Aktuatoren aufweist, die durch weitere Signale aktivierbar sind, welche vom Computer an entsprechende Schaltsignalleitungen abgegeben werden;
**dadurch gekennzeichnet,**
**dass** zum Erreichen der Simulationskonfiguration weiterhin die pyrotechnischen Elemente und/oder Aktuatoren aus dem Flugkörper ausgebaut oder deaktiviert werden.

8. Verfahren nach Anspruch 7,
**dadurch gekennzeichnet,**
**dass** die Leiter der Schaltsignalleitungen (33, 34, 35, 36) vom Computer (32) zu den ausgebauten oder deaktivierten pyrotechnischen Elementen und/oder Aktuaktoren untereinander und gemeinsam gegen Masse verbunden werden.

9. Verfahren nach Anspruch 6, 7 oder 8,
**dadurch gekennzeichnet,**
**dass** die Deaktivierung der Startvorrichtung (16") durch Unterbrechen einer die Startvorrichtung (16") in der Einsatzkonfiguration mit einem Aktivierungssignal beaufschlagenden Schaltsignalleitung (36) erfolgt.

10. Verfahren nach einem der Ansprüche 6 bis 9,
**dadurch gekennzeichnet,**
**dass** weiterhin der folgende Schritt durchgeführt wird:
- Einbau einer Telemetrieeinrichtung und/oder eines Datenrecorders in den Flugkörper (1) und Verbinden der Telemetrieeinrichtung und/oder des Datenrecorders mit dem Computer (32) zur Datenübertragung.

11. Flugkörper zum Simulieren einer Mission, bei der der unbemannte, bewaffnete und mit einem Triebwerk (16') versehene Flugkörper (1) im Tragflug an ein Trägerflugzeug (2) angekoppelt ist, wobei der Flugkörper (1)
- eine irreversibel aktivierbare Batterie (6) zur elektrischen Versorgung von elektrischen Komponenten des Flugkörpers (1) aufweist;
- bewegbare, aber im Tragflug verriegelte Steuerflächen (14, 15) aufweist;
- mit einem Suchkopf (5) versehen ist, der über eine mittels eines schaltbaren Ventils (54') abgesperrte Kühlmittelleitung mit einem in einem Vorratsbehälter (52) enthaltenen Kühlmittel kühlbar ist, und
- einen Computer (32) aufweist, auf dem eine Software läuft, die zum Einleiten eines autonomen Betriebszustands des Flugkörpers (1) zumindest folgende Schaltsignale erzeugt, die vom Computer (32) an entsprechende Schaltsignalleitungen (33, 34, 35, 36) abgegeben werden:
• ein erstes Signal (S1) zum Aktivieren der Batterie (6);
• ein zweites Signal (S2) zum Entriegeln der Steuerflächen (14, 15);
• ein drittes Signal (S3) zum Öffnen des Ventils (54') sowie
• ein viertes Signal (S4) zum Betätigen einer Startvorrichtung (16") für das Triebwerk (16');
**dadurch gekennzeichnet,**
- **dass** die Startvorrichtung (16") des Flugkörpers (1) deaktiviert ist;
- **dass** die das dritte Schaltsignal (S3) übertragende Schaltsignalleitung (35) unterbrochen ist;
- **dass** die zur Batterie (6) verlaufende Schaltsignalleitung (33) für das erste Signal (S1) von der Batterie (6) abgeklemmt und der dieser Schaltsignalleitung zugeordnete Ausgang (33") des Computers (32) mit dem schaltbaren Ventil (54') verbunden ist und
- **dass** das schaltbare Ventil (54') reversibel betätigbar ist.

12. Flugkörper nach Anspruch 11, wobei der Flugkörper (1) pyrotechnische Elemente und/oder Aktuatoren aufweist, die durch weitere Signale aktivierbar sind, welche vom Computer an entsprechende Schaltsignalleitungen abgegeben werden;
**dadurch gekennzeichnet,**
**dass** die Schaltsignalleitungen vom Computer zu den pyrotechnischen Elementen und/oder Aktuatoren aus dem Flugkörper (1) ausgebaut oder unterbrochen sind,
wobei vorzugsweise die Leiter der Schaltsignalleitungen vom Computer (32) zu den ausgebauten oder deaktivierten pyrotechnischen Elementen und/oder Aktuaktoren untereinander und gemeinsam gegen Masse verbunden sind.

13. Flugkörper nach Anspruch 11 oder 12,
**dadurch gekennzeichnet,**
**dass** die zur Startvorrichtung (16") verlaufende Schaltsignalleitung (36) unterbrochen ist.

14. Flugkörper nach einem der Ansprüche 11 bis 13,
**dadurch gekennzeichnet,**
- **dass** der Flugkörper (1) mit einer Telemetrieeinrichtung und/oder einem Datenrecorder ausgestattet ist und
- **dass** die Telemetrieeinrichtung und/oder der Datenrecorder mit dem Computer (32) zur Datenübertragung verbunden ist.

15. Flugkörper nach einem der Ansprüche 11 bis 14,
**dadurch gekennzeichnet,**
**dass** die Kontakte der Batterie (6), an denen in der Einsatzkonfiguration die Schaltsignalleitung (33) angeschlossen ist, untereinander und gemeinsam gegen Masse verbunden sind.

## Claims

1. Method of simulating a mission of an unmanned armed aerial vehicle (1) provided with a power plant (16'), which is coupled to a carrying aircraft (2) during carried flight, wherein the aerial vehicle (1)
- comprises an irreversibly activatable battery (6) for electrical supply of electrical components of the aerial vehicle (1);
- comprises movable control surfaces (14,15) which are locked when in carried flight however;
- is provided with a seeker head (5) that can be cooled by a coolant contained in a reservoir container (52) via a coolant line (56) that is shut off by a valve (54) that is irreversibly operable;
- comprises a computer (32) on which software runs that produces at least the following switching signals for initiating an autonomous operating state of the aerial vehicle, said signals being output by the computer (32) on corresponding switching signal lines (33, 34, 35, 36):
• a first signal (S1) for activating the battery (6);
• a second signal (S2) for unlocking the control surfaces (14, 15);
• a third signal (S3) for opening the valve (54) and
• a fourth signal (S4) for actuating a starting device (16") for the power plant (16');
**characterized in that**
- the aerial vehicle (1) is changed from an operational configuration to a simulation configuration by the following steps:
a) Deactivating the starting device (16");
b) Replacing the irreversibly actuatable valve (54) with a switchable valve (54') or replacing the coolant reservoir container (52) provided with the irreversibly actuatable valve (54) for a coolant reservoir container (52') provided with a switchable valve (54') and
c) Disconnecting the switching signal line (33) leading to the battery (6) for the first signal (S1) and connecting the output (33") of the computer (32) assigned to said signal line (33) to the switchable valve (54');
- a simulated mission is carried out, wherein the carrying aircraft (2) with the aerial vehicle (1) coupled to the carrying aircraft (2) is controlled along a flight path specified by the mission plan and wherein the switching signal for activation of the battery (6) is passed to the switchable valve (54') in the simulation configuration.

2. Method according to Claim 1, wherein the aerial vehicle (1) comprises pyrotechnic elements and/or actuators that can be activated by further signals that are output by the computer on corresponding signal lines;
**characterized in that**,
furthermore, the pyrotechnic elements and/or actuators are removed from the aerial vehicle or deactivated in order to achieve the simulation configuration.

3. Method according to Claim 2,
**characterized in that**
the conductors of the switching signal lines (33, 34, 35, 36) from the computer (32) to the removed or deactivated pyrotechnic elements and/or actuators can be connected to each other and collectively connected to earth.

4. Method according to any one of Claims 1, 2 or 3,
**characterized in that**
the deactivation of the starting device (16") in step a) takes place by disconnecting a switching signal line (36) that applies an activation signal to the starting device (16") in the operational configuration.

5. Method according to any of the preceding claims, **characterized in that**
- following step c) the following step is carried out:
d) Install a telemetry device and/or a data recorder in the aerial vehicle (1) and connect the telemetry device and/or the data recorder to the computer (32) for data transmission and
- During the course of the simulated mission control signals that are output by the computer (32) to components of the aerial vehicle (1) and the resulting response signals of the components are stored in the data recorder or transmitted by means of the data telemetry device to an external control centre.

6. Method for converting an unmanned armed aerial vehicle (1) provided with a power plant (16') from an operational configuration to a simulation configuration, whereby the aerial vehicle (1)
- comprises an irreversibly activatable battery (6) for electrical supply of electrical components of the aerial vehicle (1);
- comprises movable control surfaces (14, 15), which are locked in carried flight however;
- is provided with a seeker head (5) which can be cooled by a coolant contained in a reservoir container (52) via a coolant line (56) that is shut off by an irreversibly actuatable valve (54) and
- comprises a computer (32) on which software runs that generates at least the following switching signals in order to initiate an autonomous operating state of the aerial vehicle, said signals being output by the computer on corresponding switching signal lines (33, 34, 35, 36):
- a first signal (S1) for activating the battery (6);
• a second signal (S2) for unlocking the control surfaces (14, 15);
• a third signal (S3) for opening the valve (54) and
• a fourth signal (S4) for actuating a starting device (16") for the power plant (16');
**characterized by** the following steps;
- Deactivating the starting device (16");
- replacing the irreversibly actuatable valve (54) with a switchable valve (54') or replacing the coolant reservoir container (52) provided with the irreversibly actuatable valve (54) with a coolant reservoir container (52') provided with a switchable valve (54') and
- Disconnecting the switching signal line (33) leading to the battery (6) for the first signal and connecting the output (33") of the computer (32) assigned to said signal line (33) to the switchable valve (54').

7. Method according to Claim 6, wherein the aerial vehicle (1) comprises pyrotechnic elements and/or actuators that can be activated by further signals that are output by the computer on corresponding switching signal lines;
**characterized in that**,
furthermore, the pyrotechnic elements and/or actuators are removed from the aerial vehicle or deactivated in order to achieve the simulation configuration.

8. Method according to Claim 7,
**characterized in that**
the conductors of the switching signal lines (33, 34, 35, 36) from the computer (32) to the removed or deactivated pyrotechnic elements and/or actuators are connected to each other and collectively connected to earth.

9. Method according to Claim 6, 7 or 8,
**characterized in that**,
the deactivation of the starting device (16") takes place by disconnecting a switching signal line (36) that provides an activation signal to the starting device (16") in the operational configuration.

10. Method according to any one of claims 6 to 9,
**characterized in that**
the following step is also carried out:
- installing a telemetry device and/or a data recorder in the aerial vehicle (1) and connecting the telemetry device and/or the data recorder to the computer (32) for data transmission.

11. Aerial vehicle for simulating a mission, wherein the unmanned armed aerial vehicle (1), which is provided with a power plant (16'), is coupled to a carrying aircraft (2) in carried flight, wherein the aerial vehicle (1)
- comprises an irreversibly actuatable battery (6) for electrical supply of electrical components of the aerial vehicle (1);
- comprises movable control surfaces (14, 15), which are locked in carried flight, however;
- is provided with a seeker head (5), which can be cooled by a coolant contained in a reservoir container (52) via a coolant line that can be shut off by a switchable valve (54') and
- comprises a computer (32) on which software runs that produces at least the following switching signals for initiation of an autonomous operating state of the aerial vehicle (1), said signals being output by the computer (32) on corresponding switching signal lines (33, 34, 35, 36):
• a first signal (S1) for activating the battery (6);
• a second signal (S2) for unlocking the control surfaces (14, 15);
• a third signal (S3) for opening the valve (54') and
• a fourth signal (S4) for actuating a starting device (16") for the power plant (16');
**characterized in that**
- the starting device (16") of the aerial vehicle (1) is deactivated;
- the switching signal line (35) transferring the third switching signal (S3) is disconnected;
- the switching signal line (33) for the first signal (S1) leading to the battery (6) is disconnected from the battery (6) and the output (33") of the computer (32) assigned to said switching signal line is connected to the switchable valve (54') and
- that the switchable valve (54') is reversibly actuatable.

12. Aerial vehicle according to Claim 11, wherein the aerial vehicle (1) comprises pyrotechnic elements and/or actuators that can be activated by further signals that are output by the computer on corresponding switching signal lines;
**characterized in that**
the switching signal lines from the computer to the pyrotechnic elements and/or actuators are removed from the aerial vehicle (1) or disconnected, wherein the conductors of the switching signal lines from the computer (32) to the removed or deactivated pyrotechnic elements and/or actuators are preferably connected to each other and collectively connected to earth.

13. Aerial vehicle according to Claim 11 or 12,
**characterized in that**,
the switching signal line (36) leading to the starting device (16") is disconnected.

14. Aerial vehicle according to any one of Claims 11 to 13,
**characterized in that**
- the aerial vehicle (1) is provided with a telemetry device and/or a data recorder and
- the telemetry device and/or the data recorder is connected to the computer (32) for data transmission.

15. Aerial vehicle according to any one of Claims 11 to 14,
**characterized in that**
the contacts of the battery (6), to which the switching signal line (33) is connected in the operational configuration, are connected to each other and collectively connected to earth.

## Revendications

1. Procédé de simulation d'une mission d'un missile (1) non habité, armé et muni d'un mécanisme propulseur (16'), lequel est accouplé à un aéronef porteur (2) lors du vol de transport, selon lequel le missile (1)
- présente une batterie (6) activable de manière irréversible pour l'alimentation électrique des composants électriques du missile (1) ;
- présente des gouvernes (14, 15) mobiles, mais verrouillées pendant le vol de transport ;
- est muni d'une tête chercheuse (5) qui peut être refroidie avec un fluide réfrigérant contenu dans un réservoir (52) par le biais d'une conduite à fluide réfrigérant (56) fermée au moyen d'une vanne (54) pouvant être actionnée de manière irréversible ; et
- présente un ordinateur (32) sur lequel est exécuté un logiciel qui génère au moins les signaux de commutation suivants en vue d'initier un état de fonctionnement autonome du missile, lesquels sont délivrés par l'ordinateur (32) sur des lignes de signal de commutation correspondantes (33, 34, 35, 36) :
* un premier signal (S1) pour activer la batterie (6) ;
* un deuxième signal (S2) pour déverrouiller les gouvernes (14, 15) ;
* un troisième signal (S3) pour ouvrir la vanne (54) ainsi que
* un quatrième signal (S4) pour actionner un dispositif de démarrage (16") pour le mécanisme propulseur (16') ;
**caractérisé en ce**
- **que** le missile (1) est amené par les étapes suivantes d'une configuration d'intervention à une configuration de simulation :
a) Désactivation du dispositif de démarrage (16") ;
b) Remplacement de la vanne (54) pouvant être actionnée de manière irréversible par une vanne commutable (54') ou remplacement du réservoir (52) à liquide réfrigérant muni de la vanne (54) pouvant être actionnée de manière irréversible par un réservoir (52') à liquide réfrigérant équipé d'une vanne commutable (54') et
c) Déconnexion de la ligne de signal de commutation (33) pour le premier signal (S1) qui s'étend jusqu'à la batterie (6) et raccordement de la sortie (33") de l'ordinateur (32) qui est associée à cette ligne de signal de commutation (33) avec la vanne commutable (54') ;
- **qu'**une mission simulée est exécutée, l'aéronef porteur (2) muni du missile (1) accouplé à l'aéronef porteur (2) étant commandé le long d'une trajectoire de vol prédéfinie par le plan de mission et le signal de commutation pour activer la batterie (6) étant, dans la configuration de simulation, acheminé à la vanne commutable (54').

2. Procédé selon la revendication 1, selon lequel le missile (1) présente des éléments et/ou des actionneurs pyrotechniques qui peuvent être activés par des signaux supplémentaires, lesquels sont délivrés par l'ordinateur sur des lignes de signal de commutation correspondantes, **caractérisé en ce que** pour obtenir la configuration de simulation, les éléments et/ou les actionneurs pyrotechniques sont encore démontés du missile ou désactivés.

3. Procédé selon la revendication 2, **caractérisé en ce que** les conducteurs des lignes de signal de commutation (33, 34, 35, 36) de l'ordinateur (32) vers les éléments et/ou les actionneurs pyrotechniques démontés ou désactivés sont reliés entre eux et communément à la masse.

4. Procédé selon la revendication 1, 2 ou 3, **caractérisé en ce que** la désactivation du dispositif de démarrage (16'') à l'étape a) est réalisée en interrompant une ligne de signal de commutation (36) qui, en configuration d'intervention, alimente le dispositif de démarrage (16'') avec un signal d'activation.

5. Procédé selon l'une des revendications précédentes, **caractérisé en ce**
- **qu'**après l'étape c), l'étape suivante est encore exécutée :
d) Installation d'un dispositif de télémétrie et/ou d'un enregistreur de données dans le missile (1) et connexion du dispositif de télémétrie et/ou de l'enregistreur de données avec l'ordinateur (32) pour la transmission de données et
- **qu'**au cours de la mission simulée, les signaux de commande qui sont délivrés par l'ordinateur (32) aux composants du missile (1) ainsi que les signaux de réponse qui en résultent des composants sont mis en mémoire dans l'enregistreur de données ou transmis à une station de contrôle externe au moyen du dispositif de télémétrie.

6. Procédé de transformation d'un missile (1) non habité, armé et muni d'un mécanisme propulseur (16'), d'une configuration d'intervention en une configuration de simulation, selon lequel le missile (1)
- présente une batterie (6) activable de manière irréversible pour l'alimentation électrique des composants électriques du missile (1) ;
- présente des gouvernes (14, 15) mobiles, mais verrouillées pendant le vol de transport ;
- est muni d'une tête chercheuse (5) qui peut être refroidie avec un fluide réfrigérant contenu dans un réservoir (52) par le biais d'une conduite à fluide réfrigérant (56) fermée au moyen d'une vanne (54) pouvant être actionnée de manière irréversible ; et
- présente un ordinateur (32) sur lequel est exécuté un logiciel qui génère au moins les signaux de commutation suivants en vue d'initier un état de fonctionnement autonome du missile, lesquels sont délivrés par l'ordinateur sur des lignes de signal correspondantes (33, 34, 35, 36) :
* un premier signal (S1) pour activer la batterie (6) ;
* un deuxième signal (S2) pour déverrouiller les gouvernes (14, 15) ;
* un troisième signal (S3) pour ouvrir la vanne (54) ainsi que
* un quatrième signal (S4) pour actionner un dispositif de démarrage (16'') pour le mécanisme propulseur (16') ;
**caractérisé par** les étapes suivantes :
- Désactivation du dispositif de démarrage (16'') ;
- Remplacement de la vanne (54) pouvant être actionnée de manière irréversible par une vanne commutable (54') ou remplacement du réservoir (52) à liquide réfrigérant muni de la vanne (54) pouvant être actionnée de manière irréversible par un réservoir (52') à liquide réfrigérant équipé d'une vanne commutable (54') et
- Déconnexion de la ligne de signal de commutation (33) pour le premier signal qui s'étend jusqu'à la batterie (6) et raccordement de la sortie (33'') de l'ordinateur (32) qui est associée à cette ligne de signal de commutation avec la vanne commutable (54').

7. Procédé selon la revendication 6, selon lequel le missile (1) présente des éléments et/ou des actionneurs pyrotechniques qui peuvent être activés par des signaux supplémentaires, lesquels sont délivrés par l'ordinateur sur des lignes de signal de commutation correspondantes, **caractérisé en ce que** pour obtenir la configuration de simulation, les éléments et/ou les actionneurs pyrotechniques sont encore démontés du missile ou désactivés.

8. Procédé selon la revendication 7, **caractérisé en ce que** les conducteurs des lignes de signal de commutation (33, 34, 35, 36) de l'ordinateur (32) vers les éléments et/ou les actionneurs pyrotechniques démontés ou désactivés sont reliés entre eux et communément à la masse.

9. Procédé selon la revendication 6, 7 ou 8, **caractérisé en ce que** la désactivation du dispositif de démarrage (16'') est réalisée en interrompant une ligne de signal de commutation (36) qui, en configuration d'intervention, alimente le dispositif de démarrage (16'') avec un signal d'activation.

10. Procédé selon l'une des revendications 6 à 9, **caractérisé en ce que** l'étape suivante est encore exécutée :
- Installation d'un dispositif de télémétrie et/ou d'un enregistreur de données dans le missile (1) et connexion du dispositif de télémétrie et/ou de l'enregistreur de données avec l'ordinateur (32) pour la transmission de données.

11. Missile pour simuler une mission, lors de laquelle le missile (1) non habité, armé et muni d'un mécanisme propulseur (16') est accouplé à un aéronef porteur (2) pendant le vol de transport, avec lequel le missile (1)
- présente une batterie (6) activable de manière irréversible pour l'alimentation électrique des composants électriques du missile (1) ;
- présente des gouvernes (14, 15) mobiles, mais verrouillées pendant le vol de transport ;
- est muni d'une tête chercheuse (5) qui peut être refroidie avec un fluide réfrigérant contenu dans un réservoir (52) par le biais d'une conduite à fluide réfrigérant fermée au moyen d'une vanne (54') commutable ; et
- présente un ordinateur (32) sur lequel est exécuté un logiciel qui génère au moins les signaux de commutation suivants en vue d'initier un état de fonctionnement autonome du missile (1), lesquels sont délivrés par l'ordinateur (32) sur des lignes de signal de commutation correspondantes (33, 34, 35, 36) :
* un premier signal (S1) pour activer la batterie (6) ;
* un deuxième signal (S2) pour déverrouiller les gouvernes (14, 15) ;
* un troisième signal (S3) pour ouvrir la vanne (54') ainsi que
* un quatrième signal (S4) pour actionner un dispositif de démarrage (16'') pour le mécanisme propulseur (16') ;
**caractérisé en ce**
- **que** le dispositif de démarrage (16'') du missile (1) est désactivé ;
- **que** la ligne de signal de commutation (35) qui transmet le troisième signal de commutation (S3) est interrompue ;
- **que** la ligne de signal de commutation (33) pour le premier signal (S1) qui s'étend jusqu'à la batterie (6) est débranchée de la batterie (6) et la sortie (33'') de l'ordinateur (32) qui est associée à cette ligne de signal de commutation est reliée avec la vanne commutable (54') ; et
- **que** la vanne commutable (54') peut être actionnée de manière réversible.

12. Missile selon la revendication 11, avec lequel le missile (1) présente des éléments et/ou des actionneurs pyrotechniques qui peuvent être activés par des signaux supplémentaires, lesquels sont délivrés par l'ordinateur sur des lignes de signal de commutation correspondantes, **caractérisé en ce que** les lignes de signal de commutation de l'ordinateur vers les éléments et/ou les actionneurs pyrotechniques sont démontées du missile (1) ou interrompues, les conducteurs des lignes de signal de commutation de l'ordinateur (32) vers les éléments et/ou les actionneurs pyrotechniques démontés ou désactivés étant reliés entre eux et communément à la masse.

13. Missile selon la revendication 11 ou 12, **caractérisé en ce que** la ligne de signal de commutation (36) qui s'étend jusqu'au dispositif de démarrage (16'') est interrompue.

14. Missile selon l'une des revendications 11 à 13, **caractérisé en ce**
- **que** le missile (1) est équipé d'un dispositif de télémétrie et/ou d'un enregistreur de données et
- **que** le dispositif de télémétrie et/ou l'enregistreur de données est relié avec l'ordinateur (32) pour la transmission de données.

15. Missile selon l'une des revendications 11 à 14, **caractérisé en ce que** les contacts de la batterie (6) auxquels, dans la configuration d'intervention, est raccordée la ligne de signal de commutation (33) sont reliés entre eux et communément à la masse.
